## Europäisches Patentamt

## European Patent Office

## Office européen des brevets

(19)

(11) Veröffentlichungsnummer: **0 166 244**
**A2**

(12) # EUROPÄISCHE PATENTANMELDUNG

(21) Anmeldenummer: **85106541.7**

(22) Anmeldetag: **29.05.85**

(51) Int. Cl.⁴: **F 02 B 53/02,** F 01 C 11/00,
F 01 C 1/36, F 01 C 21/08

(30) Priorität: **16.06.84 DE 3422487**

(43) Veröffentlichungstag der Anmeldung: **02.01.86**
**Patentblatt 86/1**

(84) Benannte Vertragsstaaten: **AT BE CH DE FR GB IT LI LU
NL SE**

(71) Anmelder: **Zimmermann, Otto, Dr., Lehenweg 4,
A-6971 Hard/Vlbg. (AT)**

(72) Erfinder: **Zimmermann, Otto, Dr., Lehenweg 4,
A-6971 Hard/Vlbg. (AT)**

(74) Vertreter: **Riebling, Günter, Dr. et al, Patentanwälte
Dr.-Ing., Dipl.-Ing., Ing.(grad) Günter Riebling Dr.-Ing.,
Dipl.-Ing. Peter Riebling Rennerle 10 Postfach 3160,
D-8990 Lindau (Bodensee) (DE)**

(54) **Rotationskolbenmaschine.**

(57) Die außenachsige Rotationskolbenmaschine besteht aus mehreren kreisförmigen, axial hintereinander auf einer Welle befestigten Kolbenläufern, von denen jeder einen Kolben aufweist, der an einer zugeordneten, ruhenden Arbeitsraumwandung jeweils eines kreiszylindrischen Arbeitsraumes entlang läuft und der sich mit einer Ausnehmung mindestens eines sich auf dem Außenumfang des Kolbenläufers abwälzenden Absperrläufer in Eingriff befindet, wobei die Wellen des Kolbenläufers und des Absperrläufers durch Koppelzahnräder miteinander verbunden sind und das gasförmige, hochgespannte und brennfähige Medium durch einen oder mehrere mit der Welle rotierende Drehschieber in den jeweiligen Arbeitsraum ein- und ausgeleitet wird. Die Rotationskolbenmaschine ist als Verbrennungsdampfmotor derart ausgebildet, daß nach der Zündung des brennfähigen Arbeitsmediums über ein oder mehrere am Umfang der Arbeitsraumwandung verteilt angeordnete Einspritzdüsen Wasser in den Arbeitsraum eingespritzt wird.

------------------------------------------------

Rotationskolbenmaschine

------------------------------------------------

Die Erfindung betrifft eine Rotationskolbenmaschine mit mehreren kreisförmigen, axial hintereinander auf einer Welle befestigten Kolbenläufern, von denen jeder einen Kolben aufweist, der an einer zugeordneten, ruhenden Arbeitsraumwandung jeweils eines kreiszylindrischen Arbeitsraumes entlang läuft und der sich mit einer Ausnehmung mindestens eines sich auf dem Außenumfang des Kolbenläufers abwälzenden Absperrläufer in Kämmeingriff befindet, wobei die Wellen des Kolbenläufers und des Absperrläufers durch Koppelzahnräder miteinander verbunden sind und das gasförmige Medium durch einen oder mehrere mit der Welle rotierende Drehschieber in den jeweiligen Arbeitsraum ein- und ausgeleitet wird.

Eine eingangs genannte Rotationskolbenmaschine ist beispielsweise mit dem Gegenstand der EP 0023529A2 bekannt geworden. Bei dieser bekannten Rotationskolbenmaschine ist einer Hauptstufe eine sogenannte Abgas- oder Auspuffstufe nachgeschaltet. Das Arbeitsmedium wird von einem von der Welle des Absperrläufers rotierend angetriebenen Drehschieber in den jeweiligen Arbeitsraum ein- und ausgeleitet. In dieser Druckschrift ist nur angegeben, wie in Synchronisation zu der Drehung des Absperrläufers im Drehschieber Einlass- und Auslass-Schlitze geöffnet und geschlossen werden. Wie jedoch das Arbeitsmedium in den Arbeitsraum ein- und ausgeleitet wird, ist dort nicht angegeben.

Der Wirkungsgrad einer solchen Rotationskolbenmaschine ist stark verbesserungsfähig, denn überschlägig gerechnet geht ein Drittel der thermischen Energie in das Kühlwasser und ein weiteres Drittel wird über die Auspuffstufe ungenutzt ausgestoßen.

Der Rundläufer der vorliegenden Erfindung ist zu vergleichen mit einer Turbine. Im Gegensatz zu dieser ist nicht nur die resultierende Kraft des Strahlungsdruckes wirksam, sondern die volle Kraft des statischen Druckes in den immer geschlossenen Brenn- und Arbeitsräumen. Während bei der Turbine der Druckstrahl eher einen geraden Weg nimmt, beschreibt er beim Rundläufer den Weg einer Spirale. Der Ablauf wird durch Steuerscheiben geregelt. Mit Unterdruck wird außer in der ersten Stufe des Kompressors nie gearbeitet. Verbrauchte und frische Medien stoßen nie im selben Raum aufeinander, sondern sind räumlich sauber getrennt. Vom Einlaß bis zum Auspuff legen die Gase unter Druck, immer in einer Richtung strömend, einen Weg von mehreren Metern zurück und machen bei einem Ausführungsbeispiel ca. 16 Umdrehungen.

Die Umdrehungsgeschwindigkeit, an der Arbeitstaktanzahl (Zündungen) gemessen, ist halb so groß wie beim Ottomotor. Drehzahlen von 500 - 6000 U/Min. würden einer Drehzahl von 1000 - 12 000 U/Min. eines Ottomotors entsprechen. Da keine Ventile vorhanden sind und die Aufladung mit Luft zwangsweise erfolgt, könnten voraussichtlich noch viel höhere Drehzahlen erreicht werden. Der Drehzahlbereich ist also groß .

Durch die zwangsweise Beschickung mit Luft ist der Druck im Brennraum vor der Zündung immer konstant, d.h. er fällt bei steigender Drehzahl nicht ab, bringt also von vornherein die Leistungen eines Motors mit Turbolader. Die Kolben arbeiten erfindungsgemäß immer zweiseitig, d.h. sie werden gedrückt und drücken selbst den nächsten Kolben. Eine derartige Maschine ist besonders geeignet für die ansich bekannte Wassereinspritzung in den Arbeitsraum bzw. Innenraum eines Kolbenläufers.

- ↳ - 0166244

Die vorliegende Erfindung hat daher die Aufgabe, eine Rotationskolbenmaschine nach der eingangs genannten , nicht vorveröffentlichten, Art so weiterzubilden, daß unter anderem der thermische Wirkungsgrad wesentlich verbessert wird.

Zur Lösung der gestellten Aufgabe ist die Erfindung dadurchgekennzeichnet, daß die Rotationskolbenmaschine als Verbrennungsdampfmotor derart ausgebildet ist, daß nach der Zündung des brennfähigen Arbeitsmediums über ein oder mehrere am Umfang der Arbeitsraumwandung verteilt angeordnete Einspritzdüsen Wasser in den Arbeitsraum eingespritzt wird.

Wesentliches Merkmal zur Verbesserung des thermischen Wirkungsgrades ist, daß die Wassereinspritzung während des Arbeitshubes der Rotationskolbenmaschine stattfindet.

Zum einen werden über die Wassereinspritzung thermisch hochbelastete Teile im Arbeitsraum gekühlt, was dazu führt, daß die maximal zulässigen Drücke erhöht werden können, ohne daß diese Teile thermisch beschädigt werden. Zum anderen wird der Wirkungsgrad wesentlich verbessert, denn die im Arbeitsraum entstehende Verbrennungswärme wirkt auf das eingespritzte Wasser, welches in Dampf umgewandelt wird und hierdurch den Arbeitsdruck im Verbrennungsraum wesentlich erhöht, wodurch die Leistung gesteigert wird.

Einerseits erfolgt also eine Kühlung hochbelasteter thermischer Teile und andererseits erfolgt eine Drucksteigerung im Arbeitsraum, was zu einer höheren thermischen Belastung der im Arbeitsraum angeordneten Teile führt, die jedoch durch die Wassereinspritzung gekühlt werden. Um nach Zündung eines brennfähigen Gemisches eine vollständige Verbrennung dieses Gemisches zu erreichen, wird es nach dem Gegenstand des Anspruches 2 bevorzugt, wenn die erste Wassereinspritzdüse vom Zündzeitpunkt des Kolbens aus gerechnet so versetzt ist, daß das Gemisch schon vollständig verbrannt wurde und erst danach Wasser in den Arbeitsraum eingespritzt wird. Wegen der vollständigen Verbrennung des Gemisches kommt es hierbei zu niedrigen Abgas-Giftwerten, während aufgrund der nachfolgenden Wassereinspritzung es zu einer zusätzlichen Entgiftung des den Auspuff verlassenden Auspuffgases kommt.

Ein vor der Zündung durch die Konstruktion beliebig noch einstellbarer Luftdruck im Brennraum bringt nicht nur den eingespritzten Treibstoff in die vorbeistreichende Luft zum besseren Verdampfen und Verbrennen, sondern steigert darüber hinaus die Leistung des Motors beträchtlich. Da immer nur Luft vorkomprimiert wird, kann nie unerwünschte Selbstzündung erfolgen. Der Rundläufer arbeitet immer nach dem Einspritz-Selbstzündungsprinzip eines Dieselmotors. Klopfen ist nicht zu befürchten, da der Schlag der Explosion auf einen in rascher Bewegung befindlichen Kolben erfolgt.

Der Kompressorteil ist so gestaltet, daß mit steigendem Gasdruck die Flächen der Kolben stufenweise kleiner werden. Der erzeugende Druck wirkt mit der kleineren Fläche in Richtung Kompression. Die Kraftbedarfsspitzen werden weggenommen und gleichmässig auf die Umdrehungen verteilt. Auf diese Art werden die hohen  Enddrucke leichter erreicht  und der einmal erreichte Enddruck wirkt nicht mehr gegen die Drehrichtung, belastet also den Motor nicht mehr.

Ein 6-"Zylinder" des Rundläufers würde bei gleicher Umdrehungszahl einem 24-Zylinder-Ottomotor entsprechen, gemessen an der Winkelgröße und den Arbeitstakten und würde nur aus zwei beweglichen Teilen bestehen, die sich konstant gleichmässig zentrisch um ihre Achse drehen, im Gegensatz zum Ottomotor, der in diesem Fall aus ungezählten hin- und hergehenden Bestandteilen bestehen würde.

Der auch nach der Zündung lange Arbeitsweg wäre thermisch
sehr ungünstig im Verhältnis zum Ottomotor, wenn er nicht
wärmeisoliert wäre und die Kühlung nicht im Innern des
Arbeitsraumes erfolgen würde. Die große Oberfläche ist in
diesem Fall von Vorteil, da in diesem Fall das eingespritzte Wasser die Wärme von den großen Wänden besser ableiten
kann. Der entstehende Wasserdampf erhöht den Druck im
Arbeitsraum und wird zum Antrieb verwendet. Ein Drittel
der Energie wird also nicht ins Kühlwasser abgeleitet,
sondern zum Antrieb verwendet und zwar über mehrere Stufen,
so daß nur noch energiearmer Dampf beim Auspuff abgelassen
wird. Auch die Verluste, die sonst beim Auspuff entstehen (1/3) werden also weitgehend eingespart. Der Energiehaushalt ist grundlegend verändert.

Nachdem der Druck immer am langen Hebelende (12 - 14 cm)
ansetzt, und es in der Natur des Druckes liegt, sich schnell
fortzupflanzen, ist das Drehmoment günstig. Ebenso die
Leistung, da jede Umdrehung einen Arbeitstakt bedeutet
und zwar von 270° bzw. 540° anstatt von nur 180°.

Weiterhin bringt eine 7-fache Volumenvergrößerung beim
Ottomotor einen Weg von 90°, während dieselbe Volumenvergrößerung beim Rundläufer einen Weg von 210° bringt.

Wenn nach dem Gegenstand des Anspruches 3 die Wassereinspritzung über die erste Einspritzung dann erfolgt, wenn
sich der Kolben etwa in Gegenüberstellung zur Einspritzdüse befindet, so wird damit erreicht, daß der Kolben
durch die Wassereinspritzung noch zusätzlich gekühlt wird.

Hierbei wird es bevorzugt, wenn neben der ersten Einspritzdüse weitere Einspritzdüsen in der Arbeitsraumwandung am Umfang verteilt in gegenseitigem Abstand angeordnet sind, wobei die zweite und dritte Einspritzdüse etwa um jeweils 30° versetzt zueinander nacheinanderfolgend in Drehrichtung hinter der ersten Einspritzdüse angeordnet sind und wobei ferner eine vierte Einspritzdüse etwa 2 - 5° vor dem Zündzeitpunkt angeordnet ist; diese Düse arbeitet nur periodisch in Abstimmung auf den Wasserbedarf.

Wegen der Erläuterung der Funktion der vorliegenden Rotationskolbenmaschine als Verbrennungsmaschine wird auf die auf den gleichen Anmelder zurückgehende, jedoch nicht vorveröffentlichte , europäische Patentanmeldung EP 84101152.1 verwiesen.

Die vorliegende Rotationskolbenmaschine arbeitet in der Art eines Dieselmotors, so daß es sich im vorliegenden Fall um einen außenachsigen Rotationskolbenverbrennungsdampfmotor handelt.

Hierbei wird vorausgesetzt, daß in den Arbeitsraum ein zündfähiges Gemisch eingeschoben wird und die Zündung im abgeschlossenen Arbeitsraum so stattfindet, daß der Kolben in Drehrichtung vorangetrieben wird. Das verdichtete Gemisch wird über entsprechende Steuerscheiben und Überströmöffnungen in eine zweite Stufe der mehrstufigen Rotationskolbenmaschine eingeschoben, wobei in dem dortigen Arbeitsraum ebenfalls eine Zündung stattfindet, welche den dortigen Kolben mit dem Kolbenläufer in Drehrichtung antreibt. Die mehreren hintereinandergeschalteten Stufen der Rotationskolbenmaschine ergänzen und fördern sich so gegenseitig, daß es zu einer nicht gekannten Gleichförmigkeit des Laufes kommt.

Es wird hierbei bevorzugt, wenn insgesamt sechs Arbeits- stufen einer solchen Rotationskolbenmaschine hinterein- ander angeordnet sind. An die sechs Arbeitsstufen kann sich dann eine Auspuffstufe anschließen, wo kein zündfähiges Gemisch mehr erzeugt wird, sondern wo nur noch
das Auspuffgas zum Antrieb des dort angeordneten Kolbens,
der drehfest mit dem Kolbenläufer verbunden ist, verwendet wird.

Hierbei ist es vorgesehen, ebenfalls auch in der Auspuffstufe eine Wassereinspritzung analog der hier beschriebenen Wassereinspritzung vorzunehmen. Einerseits erfolgt
hier wiederum eine Abkühlung der Auspuffstufe mit einer
dadurch entstehenden Aufheizung des eingespritzten Wassers,
was zur Wärmeabfuhr verwendet wird, und andererseits erfolgt durch die Wassereinspritzung eine Drucksteigerung.

Zur Erreichung eines guten thermischen Wirkungsgrades
und zur Senkung der CO- NH- und NOx-Anteile ist es wichtig, daß im Brennluftgemisch feinstverteilt Wasser zugeführt werden kann. Hierfür eignet sich die erfindungsgemässe Ausführung der Rotationskolbenmaschine besonders
gut. Mit hoher Geschwindigkeit wird praktisch verwirbelungsfrei und gleichförmig das Medium vorbeigeführt, in
welches Wasser eingespritzt wird. Gemäss der Erfindung
erfolgt die Einspritzung senkrecht zur Strömungsrichtung
dieses Mediums. Dabei wird ähnlich dem Prinzip einer
Wasserstrahlpumpe von der Einspritzdüse weg das Wasser
durch einen entstehenden Unterdruck bei entsprechend ausgebildeter Abrißkante bei der Einspritzdüse feinstvernebelt zugeführt.

Der Erfindungsgegenstand der vorliegenden Erfindung ergibt sich nicht nur aus dem Gegenstand der einzelnen
Patentansprüche, sondern auch aus der Kombination der
einzelnen Patentansprüche untereinander.
Alle in den Unterlagen offenbarten Angaben und Merkmale,
insbesondere die in den Zeichnungen dargestellte, räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellende Zeichnungen näher erläutert. Hierbei gehen aus den Zeichnungen und ihrer Beschreibung weitere erfindungswesentliche Merkmale und Vorteile der Erfindung hervor.

Es zeigen:

Figur 1: Mittenlängsschnitt durch eine Rotationskolbenmaschine nach der vorliegenden Erfindung mit vier hintereinander angeordneten Stufen,

Figur 2: Schnitt gemäss der Linie II-II in Figur 1.

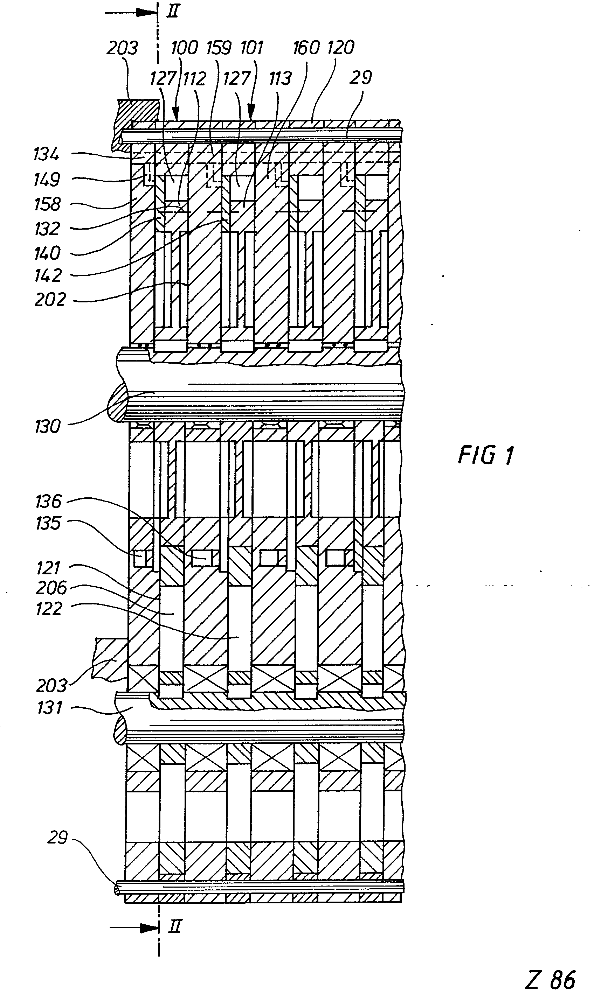

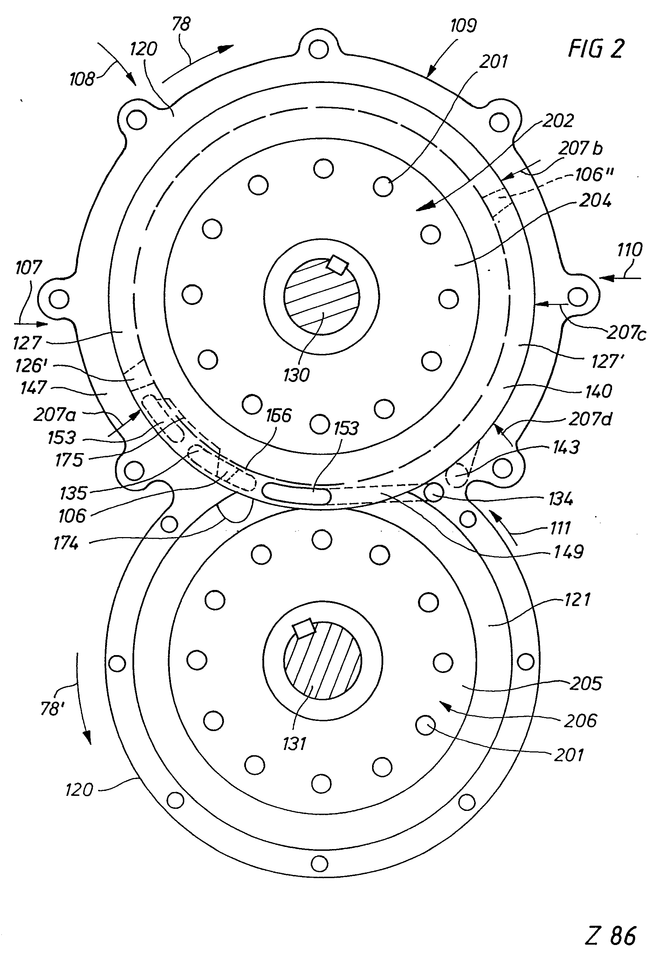

Gemäss Figur 1 ist das Maschinengehäuse 120 mit Hilfe von Schrauben 29 zusammengehalten, wobei paketweise hintereinander angeordnet als Beispiel vier verschiedene Expansionsstufen der Rotationskolbenmaschine dargestellt sind. Jede Expansionsstufe enthält einen Kolbenläufer 112,113, an dem jeweils drehfest ein radial auswärts ragender Kolben 1o6 (Figur 2) befestigt ist. Die Kolben aufeinanderfolgender Expansionsstufen 100, 101 und so weiter sind jeweils um 60° zueinander versetzt, unter der Voraussetzung, daß insgesamt sechs Expansionsstufen hintereinanderfolgend im Maschinengehäuse 120 angeordnet sind. Nachdem die Expansionsstufen 100, 101 unter sich gleich sind, sind im Ausführungsbeispiel nach Figur 1 nur beispielshaft vier Expansionsstufen dargestellt, wobei die zwei ersten, aufeinanderfolgenden Expansionsstufen 101 und 102 näher beschrieben werden.

In Figur 2 ist durch Pfeile angedeutet, an welchen Stellen des Absperrläufers jeweils der Kolben 107,108,109,110, 111 mit dem jeweiligen zugeordneten Kolbenläufer verbunden ist. Hieraus lässt sich der Versatz um 60° in Drehrichtung entnehmen.

Der Kolben 1o6 der ersten Expansionsstufe 100 dichtet mit nicht näher dargestellten Dichtungsmitteln an der Wandung des zugeordneten Arbeitsraumes 127 ab. Der zugeordnete Kolbenläufer 112 ist drehfest über jeweils zugeordnete Nutensteine mit der Motorwelle 130 verbunden. Die Motorwelle 130 ist in entsprechenden Kugellagern im Gehäuse 120 drehbar angeordnet. Innenseitig der Kolbenläufer 112,113 sind Scheiben 2o4 vorgesehen, welche den jeweiligen Kolbenläufer 112,113 mit der zugeordneten Motorwelle 130 verbinden. Jede Scheibe weist Bohrungen 201 auf, und der Innenraum zwischen Absperrläufer und Motorwelle , d.h. also der Raum, in dem die Scheibe 204 angeordnet ist, ist mit Öl gefüllt. Hierdurch wird zur besseren Abdichtung ein Schmierölfilm erzeugt. Der untere Teil des Arbeitsraumes 127 wird von dem Absperrläufer 121 abdichtend begrenzt, der jeweils drehfest über Nutensteine auf einer zweiten Welle 131 drehfest angeordnet ist. Auch jeder Absperrläufer 121 ist über eine zugeordnete Scheibe 2o5 mit der zugeordneten Welle 131 verbunden, wobei die Schelle 2o6 ebenfalls Bohrungen 201 aufweist. Auch dieser Innenraum 2o6 ist genauso wie der Innenraum 202 des Kolbenläufers 112 mit Öl gefüllt. Hierdurch ergibt sich eine Abdichtungs- und Schmierfunktion.

Die Welle 131 des Absperrläufers 121 ist mit der Welle 130 des Kolbenläufers 112 synchron über nicht näher dargestellte Koppelzahnräder gekoppelt.

An jeder Stirnseite des jeweiligen Arbeitsraumes 127 ist jeweils eine Steuerscheibe 140 angeordnet, wobei beispielhaft in Figur 1 lediglich die Steuerscheibe 140 der ersten Expansionsstufe und die Einlaß-Steuerscheibe 142 der zweiten Expansionsstufe dargestellt sind.

Jede Steuerscheibe 140, 142 ist mit zugeordneten Verbindungsschrauben 132 drehfest mit der Stirnseite des zugeordneten Kolbenläufers 112,113 verbunden. Die Steuerscheiben 140,142 begrenzen in Richtung zum Gehäuse 12o dort angeordnete Verbindungs- und Überströmkanäle 134, 135. Die Zwischenwände 158, 159,160 des Maschinengehäuses 120 sind von einem axial durchgehenden Verbindungskanal 134 durchbrochen, von dem knieförmige Stichkanäle 149 abzweigen, welche in zugeordnete Überströmkanäle 135 einmünden. Es wird darauf hingewiesen, daß in der Zeichnung, Figur 1, aus Übersichtlichkeitsgründen der Verbindungskanal 134 zusammen mit den zugeordneten Stichkanälen 149 im oberen Teil der Zeichnung gestrichelt angebracht wurde, obwohl - wie es in Figur 2 dargestellt ist - die Überströmkanäle 135 sich im mittleren Teil des Maschinengehäuses 12o befinden. Es handelt sich also bei der gestrichelten Darstellung in Figur 1 oben um eine schematisierte Übersicht, welche die Funktion des Anmeldungsgegenstandes verdeutlichen soll.

In Figur 2 ist die Stirnansicht der ersten Expansionsstufe 100 dargestellt. In schematisierter Darstellung ist die Stellung des Kolbens 1o6 der ersten Expansionsstufe 100 in zwei verschiedenen, aufeinanderfolgenden Zeitabläufen gezeigt, wobei der Kolben in Pfeilrichtung 78 rotiert und in seiner zeitlich danach liegenden Stellung als Kolben 1o6' bezeichnet ist.

Ebenso ist schematisiert in Figur 2 dargestellt, daß die anderen Kolben 1o7 - 111 in Bezug zu dem Kolben 1o6 der ersten Expansionsstufe 1oo zueinander winkelversetzt sind, und zwar im Winkelmaß von 60° von Kolben zu Kolben.

Dieses Winkelmaß ergibt sich nur, wenn man sechs Expansionsstufen verwendet.

Die Abdichtung des Arbeitsraumes 127 der ersten Expansionsstufe 100 erfolgt mit dem in Pfeilrichtung 78' rotierenden Absperrläufer 121. Die Ausnehmung 174 im Absperrläufer 121 wird dazu verwendet, damit der Kolben 1o6 des Kolbenläufers 112 sich am Absperrläufer 121 vorbeibewegen kann.

In der gezeichneten Stellung in Figur 2 befindet sich der Kolben 1o6 des Kolbenläufers 112 kurz nach Verlassen des unteren Totpunktes. Über den Überströmkanal 143 gelangen zunächst die verbrannten Gase in den Auspuffteil (nicht dargestellt) . Über den Verbindungskanal 134 strömt bei geöffneter Einlaßsteuerscheibe 14o brennfähiges Gas in den Arbeitsraum 127. In gleicher Weise werden alle anderen Arbeitsräume der übrigen Expansionsstufen mit brennfähigem Gas gemischt.

Welcher Brennstoff verwendet wird, ist für das Funktionsprinzip der vorliegenden Erfindung gleichgültig.

Dieses Gas (Arbeitsmedium) kommt von einem vorgeschalteten Kompressor, der annähernd ein Verdichtungsverhältnis von 1 : 20 aufweist. Vorgesehen ist ein Kompressor, wie er in der auf den gleichen Anmelder zurückgehenden EP 84o1152.1 bekannt ist.

Die von dem Kompressor komprimierte Luft gelangt über den Verbindungskanal 134, den knieförmigen Stichkanal 149, den Überströmkanal 135 durch die Öffnung 153 in der Steuerscheibe 14o in den Arbeitsraum 127 der ersten Expansionsstufe 100.

In Figur 2 ist dieses Überströmen kurz vor dem Beginn gezeigt, d.h. das Überströmen beginnt erst, wenn sich

die Öffnung 153 in der Steuerscheibe 14o mit dem Überströmkanal 135 in der Zwischenwand 158 schneidet.

Sobald die hintere Kante der Öffnung 153 der Einlaß-Steuerscheibe 14o die in Drehrichtung vorne liegende Kante des Überströmkanals 135 verlässt, ist der Einströmvorgang in den Arbeitsraum 127 abgeschlossen und es erfolgt am Ort der Einspritzdüse 147 die Einspritzung eines Brennstoffes, z.B. eines Dieselbrennstoffes.

Es erfolgt nun eine Verbrennung in der Brennkammer 127, der Kolben befindet sich dabei in der Stellung 1o6'. Er wird dadurch in Drehrichtung 78 vorangetrieben, und er dreht sich bis in die Stellung des Kolbens 111, wo das im Arbeitsraum 127 expandierte Gas über den Überströmkanal 143 in den Arbeitsraum des Auspuffteils einströmt, wobei die Einlaß-Steuerscheibe 14o geöffnet ist.

Sobald der Kolben 1o6 den Überströmkanal 143 für den Auspuff passiert hat, öffnet die Aussparung 175 die Verbindung zum Arbeitsraum 127, so daß im gesamten Arbeitsraum 127 der gleiche Druck herrscht. Erst, wenn der Kolben 1o6 sich in Pfeilrichtung 78 weiterdreht, und erst, wenn die Rückseite des Kolbens 1o6 wieder mit dem Absperrläufer 121 schließt, sind die vom Kolben 1o6 getrennten Arbeitskammern getrennt.

Es wird ferner darauf hingewiesen, daß in Arbeitsrichtung hinter dem jeweiligen Kolben 1o6 eine Spülöffnung 156 hinter der jeweiligen Einlaß-Steuerscheibe (im vorliegenden Ausführungsbeispiel also hinter der Einlaß-Steuerscheibe 14o) angebracht ist. Diese Spülöffnung 156 hat den Zweck, die Restgase aus dem Arbeitsraum 127 zu spülen, weil in dem Zeitpunkt, wenn sich der Kolben 1o6 im Bereich der Ausnehmung 174 befindet, überdeckt sich die Spülöffnung 156 mit einer nicht näher dargestellten Öffnung in

der zugeordneten Zwischenwand, die mit dem Überström-kanal 134 verbunden ist.

Nachdem nun ein voller Umlauf des Kolbens 1o6 beschrieben wird, wird nachfolgend die erfindungsgemässe Wassereinspritzung näher dargestellt.

Wie vorhin dargestellt, erfolgt die Zündung eines brennfähigen Gemisches im Arbeitsraum 127 in der Stellung, wenn der Kolben seine Stellung 1o6' eingenommen hat. Der Kolben wird durch die Expansion der verbrannten Gase vorwärts getrieben und gelangt nach einer Umdrehung von etwa 180° in gegenüberliegende Position zur Einspritzdüse 2o7b, wo er seine Stellung 1o6" einnimmt. Es wird dann an allen vier Stellen am Ort der Einspritzdüsen 2o7b, a, c,d gleichzeitig Wasser in den Arbeitsraum eingespritzt. Nachdem der Arbeitsraum stark aufgeheizt ist, wird über die Einspritzdüse 2o7a der Druck im Arbeitsraum dadurch erhöht, weil das Wasser im Arbeitsraum verdampft. Nachdem sich die Einspritzdüse 2o7b hinter dem Kolben 1o6" befindet, wird der Druck im Arbeitsraum noch einmal durch Einspritzen über die Einspritzdüse 2o7b erhöht. Vor dem Kolben wird über die Einspritzdüse 2o7c Wasser eingespritzt und ebenso über die Einspritzdüse 2o7 d , was einen Druck auch vor dem Kolben erzeugt. Dieser sich vor demKolben aufbauende Druck entweicht jedoch sofort über den dem Auspuff zugeordneten Überströmkanal 143, so daß der Kolbenweg hierdurch nicht gebremst wird.

Mit derEinspritzung über die Einspritzdüse 2o7d, die kurz vor dem Absperrläufer 121 angebracht ist, wird der Vorteil erreicht, daß der Absperrläufer 121 selbst über das Wasser gekühlt wird.

Die Wassereinspritzung aus der Einspritzdüse 2o7a muß dann beendet sein, wenn der Kolben die Einspritzdüse 2o7a passiert, weil der Verbrennungsraum frei von Wasser bleiben muß, um das danach eingeschobene, zündfähige Material auch entzünden zu können.

Die Menge des eingespritzten Wassers hängt von den Versuchsbedingungen ab und kann experimentell ermittelt werden.

Ebenso ist es möglich, in den nicht näher dargestellten Auspuffteil, der gleich aufgebaut ist, wie die vorliegend beschriebenen Expansionsstufen, ebenfalls Wasser eingespritzt wird.
Damit besteht der Vorteil, daß die Auspuffgase stark abgekühlt werden und hierdurch entgiftet werden. Der im Auspuffteil ausgeschobene Wasserdampf wird in einem gesonderten Wärmetauscher rückgekühlt und zur Kondensation gebracht, wodurch es in einem erneuten Kreislauf wieder eingespritzt werden kann. Das Wasser ist dann bereits schon aufgeheizt und der thermische Wirkungsgrad der vorliegenden Maschine wird hierdurch noch weiter gesteigert.

Im übrigen ist das gesamte Maschinengehäuse mit einer Wärmeisolationsschicht 2o3 umgeben, um eine nicht gewünschte Abführung von Wärme nach außen hin zu vermeiden.

## ZEICHNUNGS-LEGENDE

29 Schraube

78 Pfeilrichtung

78' Pfeilrichtung

100 Expansionsstufe 1

101 Expansionsstufe 2

1o6 Kolben 1.Stufe

1o6' Kolben 1. Stufe

1o6" Kolben 1.Stufe

1o7 Kolben 2.Stufe

1o8 Kolben 3.Stufe

1o9 Kolben 4.Stufe

110 Kolben 5. Stufe

111 Kolben 6. Stufe

112 Kolbenläufer 1.Stufe

113 "        2. Stufe

120 Gehäuse

121 Absperrläufer 1. Stufe

127 Arbeitsraum

130 Motorwelle

131 Welle des Absperrläufers

132 Schraube

134 Verbindungskanal

135 Überströmkanal

201 Bohrung

202 Innenraum (Kolbenläufer)

203 Wärmeisolationsschicht

2o4 Scheibe (Kolbenläufer)

2o5 Scheibe (Absperrläufer)

2o6 Innenraum (Absperrläufer)

2o7 Einspritzdüse a - d

136 Überströmkanal

140 Einlaß-Steuerscheibe 1ST

142 Einlaß-Steuerscheibe 2"

143 Überströmkanal (Auspuff)

147 Treibstoff-Einspritz-
    düse

149 Stichkanal

153 Öffnung (Einlaß-Steuer-
    scheibe 14o)

156 Spülöffnung (Einlaß-
    steuerscheibe 14o)

158 Zwischenwand

159 "

160 "

174 Ausnehmung (Absperr-
    läufer 121)

175 Aussparung (Kolben-
    läufer 132)

PATENTANWÄLTE

**DR.-ING. G. RIEBLING**
Dipl.-Ing., Ing. (grad.)

**DR.-ING. P. RIEBLING**
Dipl.-Ing.

Zugelassene Vertreter beim Europäischen Patentamt
Professional Representatives before European Patent Office
Mandataires agrées près l'Office européen des brevets

0166244

Mein Zeichen
Z 88-31-ku
Bitte in der Antwort wiederholen

Ihr Zeichen                    Ihre Nachricht vom                    D-8990 Lindau (Bodensee)
Rennerle 10 · Postfach 3160

23. Mai 1985

Betreff:

Anmelder: Dr. Otto Zimmermann, Lehenweg 4,
A-6971 Hard/Vlbg., Österreich

----------------------------------------------

P a t e n t a n s p r ü c h e

---

1. Rotationskolbenmaschine mit mehreren kreisförmigen, axial hintereinander auf einer Welle (130) befestigten Kolbenläufern (112,113), von denen jeder einen Kolben (106-111) aufweist, der an einer zugeordneten, ruhenden Arbeitsraumwandung jeweils eines kreiszylindrischen Arbeitsraumes (127) entlang läuft und der sich mit einer Ausnehmung (174) mindestens eines sich auf dem Außenumfang des Kolbenläufers (112,113) abwälzenden Absperrläufer (121) in Kämmeingriff befindet, wobei die Wellen (130,131) des Kolbenläufers (112,113) und des Absperrläufers (121) durch Koppelzahnräder miteinander verbunden sind und das gasförmige Medium durch einen oder mehrere mit der Welle (130) rotierende Drehschieber in den jeweiligen Arbeitsraum ein- und ausgeleitet wird, d a d u r c h   g e k e n n z e i c h n e t , daß die Rotationskolbenmaschine als Verbrennungsdampfmotor derart ausgebildet ist, daß nach der Zündung des brennfähigen Arbeitsmediums über ein oder mehrere am Umfang

Telephon:
· Lindau (0 83 82)
50 25

Telex:
54374(pat-d)
Telegramm-Adresse:
patri-lindau

Facsimilie/Telecopier
Post Lindau
☎ (08382) 5026
Group II + III

Bankkonten:
Bayer. Vereinsbank Lindau (B) Nr. 120 8578 (BLZ 735 200 74)
Hypo-Bank Lindau (B) Nr. 6670-278920(BLZ 733 204 42)
Volksbank Lindau (B) Nr. 51720000 (BLZ 735 901 20)

Postscheckkonto
München 295 25-809

der Arbeitsraumwandung verteilt angeordnete Einspritzdüsen (2o7a, b,c,d) Wasser in den Arbeitsraum (127) eingespritzt wird.

2. Rotationskolbenmotor nach Anspruch 1, d a d u r c h
g e k e n n z e i c h n e t , daß eine der Einspritzdüsen (2o7a) etwa 2 - 5° vor dem Einspritzzeitpunkt
des Treibstoffs (Treibstoff-Einspritzdüse 147) in der Arbeitsraumwandung angeordnet ist und nach Abschluß der
Verbrennung an der Rückseite des Kolbens (101-111) Wasser
in den Arbeitsraum solange einspritzt, bis der Arbeitsraum bei einem erneuten Umlauf des Kolbens (1o6-111) neu
gefüllt wird, und daß die anderen Einspritzdüsen (2o7 b,c,
d) kontinuierlich Wasser einspritzen.

3. Rotationskolbenmotor nach Anspruch 1 oder 2,
d a d u r c h   g e k e n n z e i c h n e t ,
daß das gasförmige Medium auf einem relativ langen
Weg während der Umdrehung des Kolbens (106-111) expandiert,
nämlich während eines effektiven Arbeitswinkels um
2 x 27o°.

4. Rotationskolbenmaschine nach Anspruch 3, d a d u r c h
g e k e n n z e i c h n e t , daß das Gehäuse (120) der
Rotationskolbenmaschine wärmeisoliert ist.

5. Rotationskolbenmaschine nach einem der Ansprüche 1 -.4, d a d u r c h   g e k e n n z e i c h n e t, daß der Innenraum (2o2) zwischen dem Kolbenläufer (112) und der Welle (130) mit Öl gefüllt ist.

6. Rotationskolbenmaschine nach Anspruch 1, d a d u r c h g e k e n n z e i c h n e t , daß der Einspritzstrahl des Wassers ausden Einspritzdüsen (2o7a - d) annähernd senkrecht zu den mit hoher Geschwindigkeit vorbeistreichendem Gas-Luft- oder Gas-Luft-Gemisch im Innenraum (2o2) des Kolbenläufers gerichtet ist.

7. Rotationskolbenmaschine nach Anspruch 6, d a d u r c h   g e k e n n z e i c h n e t , daß die Einspritzdüsen (2o7 a - d) zur Feinstverteilung des eingespritzten Wassers in den Gas- und/oder Luftstrom bzw. in den Gas-Luftstrom Abrißkanten aufweisen.

8. Rotationskolbenmaschine nach Anspruch 1, d a d u r c h   g e k e n n z e i c h n e t, daß im Auspuffteil, dessen Aufbau wie die Expansionsstufen ist, ebenfalls Einspritzdüsen für Wasser angeordnet sind.

FIG 1

Z 86

2/2

0166244

FIG 2

Z 86